# EUROPÄISCHE PATENTSCHRIFT

(11) **EP 2 117 973 B1**
(45) Veröffentlichungstag und Bekanntmachung des Hinweises auf die Patenterteilung: **16.05.2012**
(21) Anmeldenummer: 08707744.2
(22) Anmeldetag: 15.02.2008
(51) Int. Cl.: B65G 19/02, B65G 9/00, E01B 25/26

(54) **HÄNGEFÖRDEREINRICHTUNG MIT EINER EINSCHLEUSWEICHENVORRICHTUNG**
OVERHEAD CONVEYOR WITH A FEED SWITCHING ARRANGEMENT
CONVOYEUR SUSPENDU AVEC DISPOSITIF D'AIGUILLAGE D'INTRODUCTION

(30) Priorität: 16.02.2007 DE 102007007836
(43) Veröffentlichungstag der Anmeldung: 18.11.2009
(73) Patentinhaber: RSL Logistik GmbH & Co. KG, 86899 Landsberg (DE)
(72) Erfinder: SCHÖNENBERGER, Rolf, 86899 Landsberg (DE)
(74) Vertreter: Tiesmeyer, Johannes
(86) Internationale Anmeldenummer: PCT/EP2008/001183
(87) Internationale Veröffentlichungsnummer: WO 2008/098784

(56) Entgegenhaltungen:
- EP-B- 0 582 047
- DE-A1-102004 014 443
- DE-U1- 9 314 100

## Beschreibung

Die Erfindung betrifft eine Hängefördereinrichtung, die Führungsschienen, eine Weichenvorrichtung und Fördergutträger umfasst, wobei die Fördergutträger einen jeweiligen Basiskörper und davon zu entgegengesetzten Seiten nach außen abstehende Laufrollen aufweisen und mit jeweils wenigstens einer Laufrolle auf einer Seite des Basiskörpers an einer betreffenden Führungsschiene seitlich hängend längs einer jeweiligen Förderstrecke geführt bewegbar sind, wobei die Laufrolle mit einem Führungsprofil der Führungsschiene in Eingriff steht, und wobei die Weichenvorrichtung eine einer ersten Förderstrecke zugeordnete erste Führungsschiene und eine einer zweiten Förderstrecke zugeordnete zweite Führungsschiene, die zur ersten Führungsschiene hin führt und mittels einer Halterung relativ zur ersten Führungsschiene fixiert ist, umfasst. Eine solche Hängefördereinrichtung ist z.B. aus der EP 0 582 047 B1 bekannt.

Andere Hängefördereinrichtungen mit Führungsschienen und Fördergutträgern sind z. B. aus der DE 198 16 688 A1, der EP 0 623 497 B1 und der DE 199 43 141 A1 bekannt.

Derartige Hängefördereinrichtungen finden weit verbreitet beispielsweise in der Bekleidungsindustrie Verwendung und werden dort vorwiegend zum Transport von an Kleiderbügeln hängenden Bekleidungsstücken genutzt. Als Fördergutträger dienen dabei sogenannte Bügelträger mit einem Basiskörper, der an seinem unteren Ende einen Hakenbereich zum Einhängen eines Kleiderbügels hat und an seinem oberen Ende ein Paar zu entgegengesetzten Seiten von dem Basiskörper abstehender Laufrollen aufweist. Die Bügelträger sind mit jeweils einer Laufrolle an einer auch als Laufschiene bezeichneten Führungsschiene angehängt, wobei diese Laufrolle im Förderbetrieb an einem Führungsprofil bzw. einer Führungsrille der Laufschiene geführt rollen kann. Der Basiskörper des Bügelträgers erstreckt sich seitlich neben der Laufschiene nach unten hin in einen Förderstrecken-Freiraum. Üblicherweise ist zum Antrieb der Bügelträger ein längs der Laufschiene geführtes Antriebsband vorgesehen. Im Falle des Reibband-Antriebs handelt es sich bei dem Antriebsband um ein Reibband, welches beispielsweise als Endlosband um zwei Umlenkstationen umlaufend angetrieben wird und welches Bügelträger längs der jeweiligen Laufschiene reibschlüssig mitnehmen kann. Hängefördereinrichtungen mit solchen Reibband-Antrieben ermöglichen üblicherweise ein wahlweises Stauen einer Anzahl von Fördergutträgern bei weiterlaufendem Reibband.

Hängefördereinrichtungen der hier betrachteten Art werden häufig auch zur Durchführung von Sortieraufgaben verwendet, wobei nach entsprechenden Sortierkriterien jeweilige Fördergutträger an Abzweigungspunkten aus einer primären Förderstrecke auszuschleusen sind oder längs der primären Förderstrecke weitertransportiert werden sollen. Auch ist bei solchen Sortieraufgaben häufig ein Einschleusen von Fördergutträgern in eine primäre Förderstrecke gefordert. Zum Ausschleusen von Fördergutträgern aus einer Förderstrecke bzw. zum Einschleusen von Fördergutträgern in eine Förderstrecke sind Abzweigstationen, z. B. aus der DE 199 43 141 A1 und Übergabestationen, z. B. aus der EP 0 582 047 B1 bekannt.

Die vorliegende Erfindung befasst sich mit dem Problem des zuverlässigen Einschleusens von Fördergutträgern in eine Förderstrecke. Eine Hängefördereinrichtung mit den Eingangs genannten Merkmalen ist z.B. aus der vorstehend schon genannten EP 0 582 047 B1 bekannt. Bei dieser bekannten Hängefördereinrichtung ist die zweite Förderstrecke in Form einer Förderschleife umlaufend geschlossen und weist eine Umlenktrommel auf, an welcher längs einer Führungsschiene der zweiten Förderstrecke herangeführte Födergutträger entweder zum Verbleib auf der zweiten Förderstrecke umgelenkt oder in die ersten Förderstrecke eingeschleust werden. Eine Führungsschiene der ersten Förderstrecke erstreckt sich tangential zur Umlenktrommel mit einem geringen minimalen Abstand dazu. Beim Transport längs einer jeweiligen Führungsschiene hängen die Fördergutträger einseitig mit einer ihrer beiden Laufrollen an dem Führungsprofil der Führungsschiene, wobei diese Laufrolle an der Führungsschiene abrollt. Bei Erreichen der Umlenktrommel kommen die Fördergutträger aus der Führung der Führungsschiene der zweiten Förderstrecke frei und werden von einem Trägerflansch der Umlenktrommel in Eingriff genommen, wobei die Fördergutträger obere Schultern aufweisen, mit denen sie sich an dem Trägerflansch der Umlenktrommel abstützen, während sie von der Umlenktrommel bei deren Drehung mitgenommen werden. Ein als Weichenvorrichtung wirkender Umsetzer weist einen sich zwischen der Umlenktrommel und der dazu tangential verlaufenden Führungsschiene der ersten Förderstrecke befindlichen Drücker auf, der zwischen zwei Schaltstellungen hin- und herbewegbar ist. In einer ersten Schaltstellung lässt der Drücker die auf der Umlenktrommel transportierten Fördergutträger unbeeinflusst auf der zweiten Förderstrecke umlaufen. In einer zweiten Schaltstellung nimmt er einen oberen Steg der von der Umlenktrommel mitgenommenen Fördergutträger in Eingriff und führt den Fördergutträger in radialer Richtung fort von der Umlenktrommel hin zu der benachbarten Führungsschiene der ersten Förderstrecke. Diese Führungsschiene ist im Wirkungsbereich der Umsetzervorrichtung mit einer Ausfräsung präpariert, die es erlaubt, dass die von dem Drücker radial von der Umlenktrommel abgeleitete Fördergutträger mit ihrer von der zweiten Förderstrecke bisher seitlich nach außen abstehenden freien Laufrolle in Führungseingriff mit dem Führungprofil der Laufschiene der ersten Förderstrecke kommen können. Sobald die Fördergutträger von der Führungsschiene der ersten Förderstrecke aufgenommen worden sind, kommen sie mit ihrer Stützschulter von dem Trägerflansch der Umlenktrommel und somit von der zweiten Förderstrecke insgesamt frei. Damit das Einschleusen von längs der zweiten Förderstrecke herangeführten Fördergutträgern in die erste Förderstrecke funktionieren kann, waren verschiedene, teils aufwendige Anpassungsmaßnahmen bei der Hängefördereinrichtung nach der EP 0 582 047 B1 erforderlich. Zu diesen Maßnahmen zählt eine spezielle Ausgestaltung der Umlenktrommel mit Trägerflansch und Zwangsführungselementen, ein aktiv zu schaltender und in seiner jeweiligen Stellung zu überwachender Umsetzer, eine Ausfräsung der Führungsschiene der ersten Förderstrecke im Wirkungsbereich des Umsetzers, sowie spezielle Formanpassungen der Fördergutträger, nämlich einen oberen Steg, der von dem Drücker der Umsetzervorrichtung in Eingriff zu nehmen ist, und obere Schultern zur Abstützung des Fördergutträgers an dem Trägerflansch der Umlenktrommel. Ferner ist bei der Hängefördereinrichtung gemäß der EP 0 582 047 B1 eine Übergabe der Fördergutträger von der zweiten Förderstrecke auf die erste Förderstrecke nur unter Vermittlung einer Umlenktrommel und nicht mit einfachen Mitteln von Führungsschiene zu Führungsschiene möglich.

Aus der DE 93 14 100 U1 ist eine Hängefördereinrichtung bekannt geworden, welche das Einschleusen von Fördergutträgern von einer zweiten Förderstrecke in eine erste Förderstrecke unmittelbar von einer Führungsschiene der zweiten Förderstrecke zu einer Führungsschiene der ersten Förderstrecke unter Verwendung eines schwenkbaren in einer Einschleusstellung die Führungschiene der zweiten Förderstrecke verlängernden Weichenschenkels ermöglicht. Der Weichenschenkel ist durch Schwerkrafteinwirkung eines über den Weichenschenkel zugeführten Fördergutträger von einer Passivstellung zur Einschleusstellung hin zu drängen. Es handelt sich bei der Hängefördereinrichtung nach der DE 93 14 100 U1 jedoch um einen anderen Typ als bei den Fördereinrichtungen der hier betrachteten Art. Bei der Hängefördereinrichtung gemäß der DE 93 14 100 U1 sind die Laufschienen als dachförmige Winkelelemente ausgebildet. Die Fördergutträger weisen V-förmige Laufwerke mit jeweils einer Laufrolle an jedem freien Laufwerkschenkelende auf. Die Fördergutträger stützen sich mit ihren Laufrollen an den oberen Dachflächen der betreffenden Laufschiene ab, wobei sich das V-förmige Laufwerk unter der Laufschiene hindurch erstreckt. Damit bei der Hängefördereinrichtung gemäß der DE 93 14 100 U1 ein Fördergutträger von der zweiten Förderstrecke zu der ersten Förderstrecke überführt werden kann, ist grundsätzlich eine Unterbrechung der Führungsschiene der ersten Förderstrecke erforderlich, an welcher die Weichenzunge, welche die Fördergutträger von der zweiten Förderstrecke heranführen soll, direkt an die betreffende Führungsschiene der ersten Förderstrecke angeschlossen werden kann. Die Weichenvorrichtung der aus DE 93 14 100 U1 bekannten Hängefördereinrichtung benötigt zwei wechselseitig schaltbare Weichenschenkel bzw. Führungsschienensegmente, damit die erste Förderstrecke stets betriebsbereit bleiben kann.

Aufgabe der Erfindung ist es, eine eine Hängefördereinrichtung der eingangs erläuterten Art mit einer Weichenvorrichtung bereitzustellen, die zum Einschleusen von Fördergutträgern in eine Primärförderstrecke geeignet ist, einen einfachen Aufbau hat und zuverlässig funktioniert.

Zur Lösung dieser Aufgabe wird vorgeschlagen, dass bei einer Hängefördereinrichtung der eingangs genannten Art die Weichenvorrichtung einen als bewegbares Führungsschienensegment ausgebildeten Einschleusweichenschenkel zum Überleiten von längs der zweiten Förderstrecke herangeführten Fördergutträgern von der zweiten Führungsschiene zur ersten Führungsschiene aufweist, wobei der Einschleusweichenschenkel mittels einer Gelenkanordnung an dem der ersten Führungsschiene benachbarten Ende der zweiten Führungsschiene in deren Verlängerung frei schwenkbeweglich so gehalten ist, dass er zwischen einer Einschleusstellung und einer Passivstellung schwenkbar und durch Belastung durch einen ihm über die zweite Führungsschiene zugeführten Fördergutträger von der Passivstellung zur Einschleusstellung hin zu drängen ist, wobei er in der Einschleusstellung eine zur ersten Führungsschiene führende Verlängerung der zweiten Führungsschiene bildet und relativ zur ersten Führungsschiene so positioniert ist, dass er einen jeweiligen von der zweiten Führungsschiene zugeführten Fördergutträger bei dessen Weiterbewegung auf die erste Führungsschiene führen kann und dabei der mit einer auf einer Seite seines Basiskörpers angeordneten Laufrolle an dem Einschleusweichenschenkel hängend bewegte Fördergutträger mit einer auf der anderen Seite seines Basiskörpers angeordneten Laufrolle mit dem Führungsprofil der ersten Führungsschiene in Eingriff kommen kann.

Ein Hauptmerkmal der als Einschleusweiche ausgebildeten Weichenvorrichtung ist die im Wesentlichen freie Schwenkbeweglichkeit des Einschleusweichenschenkels um seine Schwenkachse, so dass der Weichenschenkel gemäß einer bevorzugten Ausgestaltung der Erfindung keine Normal-Vorzugsstellung hat, sondern jeweils bis auf Weiteres im Wesentlichen in der Stellung verbleibt, in die er bei Kontakt mit einem letzten Fördergutträger von diesem verdrängt wurde. Dies kann die Einschleusstellung sein, falls der letzte Kontakt mit einem Fördergutträger beim Einschleusen dieses Fördergutträgers in die erste Förderstrecke stattgefunden hat. Dies kann andererseits eine Passivstellung sein, falls der letzte Kontakt des Einschleusweichenschenkels mit einem längs der ersten Führungsschiene zugeführten Fördergutträger bei dessen Weiterleitung längs der ersten Förderstrecke stattgefunden hat. In diesem Fall stößt der Fördergutträger mit seiner der ersten Führungsschiene abgewandten Seite an dem noch in Einschleusstellung befindlichen Einschleusweichenschenkel an und verdrängt ihn in eine Passivstellung. Nachfolgend längs der ersten Förderstrecke herangeführte Fördergutträger können dann normalerweise ohne Berührung mit dem Einschleusweichenschenkel weiterbewegt werden, bis dieser von einem einzuschleusenden Fördergutträger wieder in die Einschleusstellung verschwenkt worden ist. Es sind somit keine Rückstellmittel, wie etwa Federn oder dgl., erforderlich, um den Einschleusweichenschenkel in eine Normal-Vorzugsstellung vorzuspannen. Dies ermöglicht einen sehr einfachen Aufbau der Weichenvorrichtung mit einem einfachen Scharnier als Gelenkanordnung für den Einschleusweichenschenkel.

Vorzugsweise weisen die zweite Führungsschiene und der Einschleusweichenschenkel ein Gefälle hin zur ersten Führungsschiene von z. B. 5° - 10° relativ zur Horizontalen auf, so dass sich daran geführte Fördergutträger im Gefällebereich allein aufgrund ihrer Schwerkraft zur ersten Führungsschiene bewegen und dabei selbsttätig den Einschleusweichenschenkel in die Einschleusstellung drängen können. Insbesondere zu diesem Zweck wird als besonders bevorzugte Maßnahme weiterhin vorgeschlagen, dass am Übergang zwischen - und im Abstand zu der zweiten Führungsschiene und dem Einschleusweichenschenkel ein Einweiselement angeordnet ist, und zwar zur Zwangsführung von längs der zweiten Führungsschiene herangeführten und mit einer ihrer Laufrollen an dem Einschleusweichenschenkel hängend bewegten Fördergutträgern in Richtung zur ersten Führungsschiene, so dass bei nicht in Einschleusstellung befindlichem Einschleusweichenschenkel ein den Einschleusweichenschenkel zur Einschleusstellung drängendes Moment von einem an dem Einweiselement zwangsgeführten Fördergutträger auf den Einschleusweichenschenkel ausgeübt werden kann. Bei dem Einweiselement handelt es sich vorzugsweise um eine oberhalb des Einschleusweichenschenkels verlaufende starre Führungsleiste, die mit dem Basiskörper des betreffenden Fördergutträgers, der dem Einschleusweichenschenkel von der zweiten Führungsschiene her zugeführt wird, in Führungseingriff kommen kann. Der Fördergutträger kommt dabei mit einem oberen Abschnitt seines Basiskörpers mit der Führungsleiste in Kontakt, so dass dieser obere Bereich des Basiskörpers dem zur ersten Führungsschiene führenden Verlauf der Führungsleiste folgen muss. Aufgrund seines Gewichtes tendiert der Fördergutträger dabei dazu, seine vertikale Ausrichtung beizubehalten, wozu er ggf. vermittels der mit dem Laufprofil des Einschleusweichenschenkels in Führungseingriff stehenden Laufrolle den Einschleusweichenschenkel zusätzlich seitlich in die Einschleusstellung drängt. Der Fördergutträger kommt dann über den sicher in Einschleusstellung befindlichen Einschleusweichenschenkel zur Weiterfahrt auf der ersten Führungsschiene an.

In alternativen Varianten der Erfindung kann es z. B. vorgesehen sein, dass die zweite Führungsschiene und der Einschleusweichenschenkel kein Gefälle hin zur ersten Führungsschiene aufweisen.

Ein Ausführungsbeispiel der Einschleusweichenvorrichtung nach der Erfindung wird nachstehend unter Bezugnahme auf die Figuren 1 - 3 näher erläutert.
- Fig. 1: zeigt ein Ausführungsbeispiel einer Einschleusweichenvorrichtung einer Hängefördereinrichtung nach der Erfindung in einer Vorderansicht mit in Einschleusstellung geschaltetem Weichenschenkel und einem darauf zur Überleitung auf eine erste Förderstrecke befindlichen Fördergutträger.
- Fig. 2: zeigt eine Draufsicht auf die Einschleusweichenvorrichtung ge- mäß Fig. 1 in der gleichen Momentaufnahme.
- Fig. 3: zeigt die Einschleusweichenvorrichtung aus Fig. 1 mit in Passivstellung befindlichem Einschleusweichenschenkel und an der ersten Führungsschiene geführtem Fördergutträger.

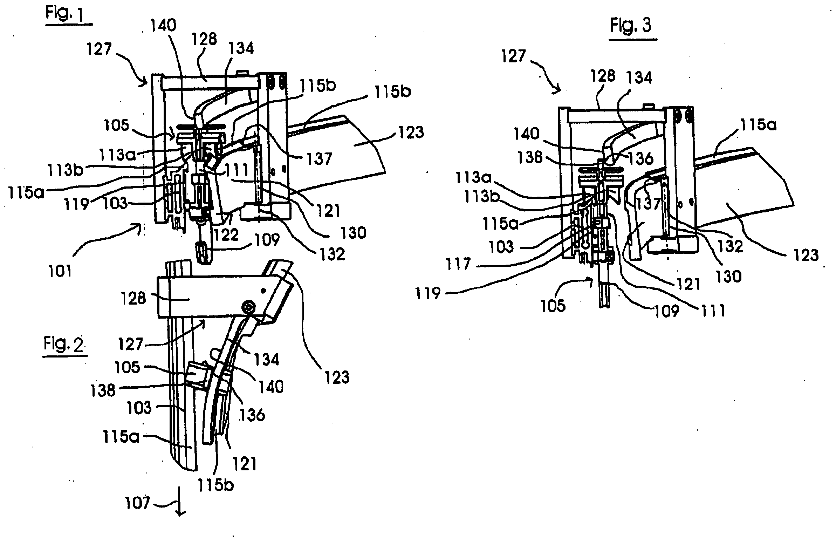

Die als Einschleusweiche dienende Weichenvorrichtung 101 in Fig. 1 umfasst eine erste Führungsschiene 103, die im betriebsmäßigen Einbauzustand in einer Hängefördereinrichtung einer ersten Förderstrecke zugeordnet ist, längs welcher Fördergutträger 105 in der Förderrichtung 107 bewegbar sind. Im Beispielsfall verläuft die erste Führungsschiene 103 horizontal.

Bei den zu transportierenden Fördergutträgern 105 handelt es sich im Beispielsfall um sog. Bügelträger zum Transport von an Kleiderbügeln hängenden Kleidungsstücken. Jeder Bügelträger 105 weist an seinem unteren Ende einen Haken 109 auf, in den der Haken eines Kleiderbügels eingehängt werden kann. Jeder Fördergutträger 105 hat einen im Wesentlichen vertikal aus gerichteten Basiskörper 111 und zwei gleichartige, an den einander entgegengesetzten Lateralseiten des Basiskörpers 111 nach außen abstehende konische Laufrollen 113a, 113b. Während der Bewegung längs einer Führungsschiene stützt sich der Fördergutträger 105 mit jeweils einer Laufrolle 113a bzw. 113b an einem Führungsprofil 115a bzw. 115b der betreffenden Führungsschiene ab, so dass er seitlich an der Führungsschiene angehängt und in Längsrichtung der Führungsschiene geführt ist. Unterhalb der Laufrollen 113a, 113b ist jeweils ein seitlicher Vorsprung mit einer äußeren Reibfläche 117 an dem Basiskörper 111 des Fördergutträgers 105 vorgesehen. Die der ersten Führungsschiene 103 jeweils zugewandte Reibfläche 117 eines längs der ersten Förderstrecke bewegten Fördergutträgers 105 steht normalerweise mit einem Reibband 119 in reibschlüssigem Kontakt. Das Reibband 119 ist zur Bewegung längs der ersten Förderstrecke an der Führungsschiene 103 geführt und kann bei seiner Bewegung die reibschlüssig angekoppelten Fördergutträger 105 mitnehmen.

Die Weichenvorrichtung 101 umfasst ein hier als Einschleusweichenschenkel bezeichnetes bewegbares Führungsschienensegment 121 zum Überleiten von längs der zweiten Führungsschiene 123 herangeführten Fördergutträgern 105 zur ersten Führungsschiene 103. Der Einschleusweichenschenkel 121 hat wie auch die erste Führungsschiene 103 und die zweite Führungsschiene 123 ein Führungsprofil 115b mit einer zur konischen Form der Laufrollen 113 der Fördergutträger 105 komplementären, zum oberen Schienenrand hin schräg ansteigenden Kontur. Der Einschleusweichenschenkel 121 und die zweite Führungsschiene 123 können daher in gleicher Weise wie die erste Führungsschiene 103 einen Fördergutträger 105 an einer seiner Laufrollen 113a bzw. 113b in Eingriff nehmen, um ihn zur Bewegung zur ersten Führungsschiene 103 hin zu führen. Der Einschleusweichenschenkel 121 und die zweite Führungsschiene 123 sind einer zweiten Förderstrecke zugeordnet und weisen ein Gefälle von z. B. 7° relativ zur Horizontalen auf, so dass sich darauf laufende Fördergutträger 105 aufgrund der Schwerkraft in Richtung zur ersten Führungsschiene 103 bewegen können.

An einer gemeinsamen Halterungsanordnung 127 sind die erste Führungsschiene 103, die zweite Führungsschiene 123 und der Einschleusweichenschenkel 121 angeordnet. Der Weichenschenkel 121 bildet in der in Fig. 1 gezeigten Einschleusstellung eine kontinuierliche Verlängerung der zweiten Führungsschiene 123, wobei die Führungsprofile 115b quasi stufenfrei und lückenfrei aneinander anschließen. Ein daran mit einer Laufrolle 113b hängend bewegbar geführter Fördergutträger 105 kommt bei Erreichen des freien Endes 122 des Einschleusweichenschenkels 121 mit seiner bis dahin freien Laufrolle 113a auf der anderen Seite des Fördergutträger-Basiskörpers 111 mit dem Laufprofil 115a der ersten Führungsschiene 103 in Führungseingriff, um dann schließlich nach Verlassen des Einschleusweichenschenkels 121 längs der ersten Führungsschiene 103 weiterzulaufen. In den Fig. 1 und 2 ist ein solcher Fördergutträger 105 in der Situation kurz vor der Überleitung vom Einschleusweichenschenkel 121 zur ersten Führungsschiene 103 dargestellt.

Der Einschleusweichenschenkel 121 ist durch ein Scharnier 130 frei schwenkbeweglich um eine vertikale Schwenkachse 132 gelagert, so dass er mit geringem Kraftaufwand verschwenkt werden kann, um ihn in eine Passivstellung gemäß Fig. 3 zu bringen. Dies kann z. B. durch Anstoßen eines längs der ersten Förderstrecke auf der ersten Führungsschiene 103 herangeführten Fördergutträgers 105 an den Einschleusweichenschenkel 121 erfolgen, der dabei in etwa in die Passivstellung gemäß Fig. 3 verdrängt werden kann. Nachfolgende Fördergutträger 105 können dann frei längs der ersten Förderstrecke bewegt werden, bis ein weiterer Fördergutträger 105 von der zweiten Förderstrecke her eingeschleust werden muss. Dabei ist darauf zu achten, dass zum Zeitpunkt des Einschleusens kein längs der ersten Führungsschiene 103 bewegter Fördergutträger 105 in die Nähe des Einschleusweichenschenkels 121 gelangt.

In dem Fall, dass sich ein Fördergutträger 105 auf der zweiten Führungsschiene 123 dem in der Passivstellung gemäß Fig. 3 befindlichen Einschleusweichenschenkel 121 nähert und die Übergangsstelle 137 zwischen den Führungsprofilen 115b der zweiten Führungsschiene 123 und des Einschleusweichenschenkels 121 erreicht, so kommt es aufgrund der Ineingriffnahme des Führungsprofils 115b des Einschleusweichenschenkels 121 durch die Laufrolle 113b des Fördergutträgers 105 zu einer Belastung des Einschleusweichenschenkels 121, die ihn zum Übergang in die Einschleusstellung gemäß Fig. 1 drängt. Dies erfolgt unter dem Gewicht des Fördergutträgers 105. Um diesen Effekt zu verstärken, kann es vorgesehen sein, dass die Schwenkachse 132 des den Einschleusweichenschenkel 121 frei schwenkbar haltenden Scharnieres 130 leicht zur ersten Führungsschiene 103 hin geneigt ist. Vorzugsweise ist der Einschleusweichenschenkel 121 dann so austariert, dass das aufgrund seines Eigengewichtes wirkende und ihn zur Einschleusstellung hin belastende Drehmoment durch Lagerreibung, insbesondere im Scharnier 130, kompensiert wird, so dass der unbelastete Einschleusweichenschenkel 121 in der jeweiligen zuletzt eingenommenen Stellung verbleibt. Wird der Einschleusweichenschenkel 121 jedoch von einem Fördergutträger 105 durch dessen Gewicht und ggf. durch das Gewicht des daran hängenden Fördergutes belastet, so wird bei der Ausführungsform mit schräg stehender Schwenkachse 132 des Scharniers 130 die Lagerreibung überwunden und der Einschteusweichenschenkel 121 kippt unter dem Gewicht des Fördergutträgers 105 in die Einschleusstellung.

In den Fig. 1 - 3 ist ein an der oberen Querplatte 128 der Halterungsanordnung 127 befestigtes Einweiselement 134 in Gestalt einer starren Führungsleiste zu erkennen. Die Führungsleiste 134 dient zur Zwangsführung der Fördergutträger 105 an deren oberen Enden in Richtung zur ersten Führungsschiene 103, wie dies in den Fig. 1 und 2 an dem Beispiel des dort eingezeichneten Fördergutträgers 105 zu erkennen ist. Ein solcher längs der zweiten Führungsschiene 123 herangeführter Fördergutträger 105 kommt im Bereich der Übergangsstelle 137 zwischen zweiter Führungsschiene 123 und Einschleusweichenschenkel 121 in Führungseingriff mit der Führungsleiste 134, wobei die zur Seite des Einschleusweichenschenkels 121 weisende Seitenfläche 136 des nach oben vom Basiskörper 111 abstehenden Kopfsteges 138 des Fördergutträgers 105 mit der der Seite zum Einschleusweichenschenkel 121 abgewandten Seitenfläche 140 der Führungsleiste 134 in Führungskontakt kommen kann. Sollte sich der Einschleusweichenschenkel 121 dabei noch nicht in der Einschleusstellung befinden, so würde der mit seiner Laufrolle 113b auf dem Führungsprofil 115b laufende Fördergutträger 105 zur Seite geneigt sein, da er an seinem oberen Kopfsteg 138 mittels der Führungsleiste 134 zwangsgeführt ist. Aufgrund seines Gewichtes tendiert der Fördergutträger 105 jedoch dazu, seine vertikale Ausrichtung einzunehmen. Da die konische Laufrolle 113b des Fördergutträgers 105 mit dem komplementären Führungsprofil 115b des Einschleusweichenschenkels 121 in dieser Situation in Eingriff steht, verschwenkt der sich in seine Vertikalausrichtung einstellende Fördergutträger 105 den Einschleusweichenschenkel 121 in die Einschleusstellung.

In den vorstehend erläuterten Ausführungsbeispielen handelt es sich bei den gezeigten Fördergutträgern 105 um Einzelbügelträger. Die Erfindung ist jedoch nicht auf die Verwendung mit solchen Einzelbügelträgern beschränkt, sondern kann auch Anwendung finden bei Fördergutträgern dieser Bauart, die durch Verbindungselemente gekoppelt sind und somit einseitig an Führungsschienen anzuhängende Laufwagen bilden, die z. B. auf deren Verbindungselementen Haken von mehreren Kleiderbügeln oder dgl. aufnehmen können.

## Patentansprüche

1. Hängefördereinrichtung, die Führungsschienen (103, 123), eine Weichenvorrichtung (101) und Fördergutträger (105) umfasst, wobei die Fördergutträger (105) einen jeweiligen Basiskörper (111) und davon zu entgegengesetzten Seiten nach außen abstehende Laufrollen (113a, 113b) aufweisen und mit jeweils wenigstens einer Laufrolle (113a, 113b) auf einer Seite des Basiskörpers (111) an einer betreffenden Führungsschiene (103, 123) seitlich hängend längs einer jeweiligen Förderstrecke geführt bewegbar sind, wobei die Laufrolle (113a, 113b) mit einem Führungsprofil (115a, 115b) der Führungsschiene (103, 123) in Eingriff steht, und wobei die Weichenvorrichtung eine einer ersten Förderstrecke zugeordnete erste Führungsschiene (103) und eine einer zweiten Förderstrecke zugeordnete zweite Führungsschiene (123), die zur ersten Führungsschiene (103) hin führt und mittels einer Halterung (127) relativ zur ersten Führungsschiene (103) fixiert ist, umfasst,
**dadurch gekennzeichnet,**
**dass** die Weichenvorrichtung einen als bewegbares Führungsschienensegment ausgebildeten Einschleusweichenschenkel (121) zum Überleiten von längs der zweiten Förderstrecke herangeführten Fördergutträgern (105) von der zweiten Führungsschiene (123) zur ersten Führungsschiene (103) aufweist, wobei der Einschleusweichenschenkel (121) mittels einer Gelenkanordnung (130) an dem der ersten Führungsschiene (103) benachbarten Ende der zweiten Führungsschiene (123) in deren Verlängerung frei schwenkbeweglich so gehalten ist, dass er zwischen einer Einschleusstellung und einer Passivstellung schwenkbar und durch Belastung durch einen ihm über die zweite Führungsschiene (123) zugeführten Fördergutträger (105) von der Passivstellung zur Einschleusstellung hin zu drängen ist, wobei er in der Einschleusstellung eine zur ersten Führungsschiene (103) führende Verlängerung der zweiten Führungsschiene (123) bildet und relativ zur ersten Führungsschiene (103) so positioniert ist, dass er einen jeweiligen von der zweiten Führungsschiene zugeführten Fördergutträger (105) bei dessen Weiterbewegung auf die erste Führungsschiene (103) führen kann und dabei der mit einer auf einer Seite seines Basiskörpers (111) angeordneten Laufrolle (113b) an dem Einschleusweichenschenkel (121) hängend bewegte Fördergutträger (105) mit einer auf der anderen Seite seines Basiskörpers (111) angeordneten Laufrolle (113a) mit dem Führungsprofil (115a) der ersten Führungsschiene (103) in Eingriff kommen kann.

2. Hängefördereinrichtung nach Anspruch 1, wobei die zweite Führungsschiene (123) und/oder der Einschleusweichenschenkel (121) ein Gefälle hin zur ersten Führungsschiene (103) aufweisen, so dass sich daran geführte Fördergutträger (105) im Gefällebereich allein aufgrund ihrer Schwerkraft zur ersten Führungsschiene (103) bewegen können.

3. Hängefördereinrichtung nach Anspruch 1 oder 2, wobei am Übergang zwischen - und im Abstand zu der zweiten Führungsschiene (123) und dem Einschleusweichenschenkel (121) ein Einweiselement (134) angeordnet ist, und zwar zur Zwangsführung von längs der zweiten Führungsschiene (123) herangeführten und mit einer ihrer Laufrollen (113b) an dem Einschleusweichenschenkel (121) hängend bewegten Fördergutträgern (105) in Richtung zur ersten Führungsschiene (103), so dass bei nicht in Einschleusstellung befindlichem Einschleusweichenschenkel (121) ein den Einschleusweichenschenkel (121) zur Einschleusstellung drängendes Moment von einem an dem Einweiselement (134) zwangsgeführten Fördergutträger (105) auf den Einschleusweichenschenkel (121) ausgeübt werden kann.

4. Hängefördereinrichtung nach Anspruch 3, wobei das Einweiselement (134) eine oberhalb des Einschleusweichenschenkels (121) verlaufende starre Führungsleiste ist, die mit dem Basiskörper (111) eines dem Einschleusweichenschenkel (121) von der zweiten Führungsschiene (123) her zugeführten Fördergutträgers (105) in Führungseingriff kommen kann.

5. Hängefördereinrichtung nach einem der vorhergehenden Ansprüche 1 bis 4, wobei der Einschleusweichenschenkel (121) mittels eines Scharniers (130) um eine gegenüber der Vertikalen leicht geneigten Schwenkachse (132) schwenkbar an dem der ersten Führungsschiene (103) benachbarten Ende der zweiten Führungsschiene (123) gelagert ist, so dass er unter der Gewichtskraft eines Fördergutträgers (105) ein Drehmoment bezüglich der Schwenkachse (123) erfährt, das ihn zur Einschleusstellung hin tendieren lässt.

## Claims

1. Suspended conveying device, which comprises guiding rails (103, 123), a switching arrangement (101) and carriers for material to be conveyed (105), wherein the carriers for material to be conveyed (105) comprise respectively a base body (111) and rollers (113a, 113b) projecting out from the latter on opposite sides and can be guided by at least one roller (113a, 113b) on one side of the base body (111) suspended laterally on a respective guiding rail (103, 123) along a respective conveying path, wherein the roller (113a, 113b) is in engagement with a guiding profile (115a, 115b) of the guiding rail (103, 123), and wherein the switching arrangement comprises a first guiding rail (103) assigned to a first conveying path and a second guiding rail (123) assigned to a second conveying path, which leads to the first guiding rail (103) and is fixed by means of a holder (127) relative to the first guiding rail (103),
**characterised in that**
the switching arrangement comprises a diverter switch blade (121) configured as a movable guiding rail segment for transferring carriers for material to be conveyed (105) along the second conveying path from the second guiding rail (123) to the first guiding rail (103), wherein the diverter switch blade (121) is held by means of an articulation arrangement (130) at the end of the second guiding rail (123) adjacent to the first guiding rail (123) to be freely pivotable in its extension, so that it can be pivoted between a diverting position and a passive position and is pushed by loading from a carrier for material to be conveyed (105) supplied thereto via the second guiding rail (123) from the passive position to the diverting position, wherein in the diverting position it forms an extension of the second guiding rail (123) leading to the first guiding rail (103) and is positioned relative to the first guiding rail (103), so that it can guide a respective carrier for material to be conveyed (105) supplied by the second guiding rail on its further movement up to the first guiding rail (103), and in this case the carrier for material to be conveyed (105) suspended by a roller (113b) arranged on one side of its base body (111) on the diverter switch blade (121) can come into engagement with a roller (113a) arranged on the other side of its base body (111) with the guiding profile (115a) of the first guiding rail (103).

2. Suspended conveying device according to claim 1, wherein the second guiding rail (123) and/or diverter switch blade (121) are inclined relative to the first guiding rail (103) so that carriers for material to be conveyed (105) guided thereon can only move in the inclined section by gravitational force to the first guiding rail (103).

3. Suspended conveying device according to claim 1 or 2, wherein at the transition between and spaced apart from the second guiding rail (123) and the diverter switch blade (121) a directing element (134) is arranged for the forced guiding of carriers for material to be conveyed (105), which guided along the second guiding rail (123) and suspended by one of their rollers (113b) on the diverter switch blade (121), in the direction of the first guiding rail (103), so that with a diverter switch blade (121) not located in the diverting position a torque forcing the diverter switch blade (121) to the diverting position can be exerted by a carrier for material to be conveyed (105) forced onto the diverting element (134) to the diverter switch blade (121).

4. Suspended conveying device according to claim 3, wherein the directing element (134) is a rigid guiding strip running above the diverting switch blade (121) which can come into guiding engagement with the base body (111) of a carrier for material to be conveyed (105) supplied to the diverter switch blade (121) by the second guiding rail (123).

5. Suspended conveying device according to any one of the preceding claims 1 to 4, wherein the diverter switch blade (121) is mounted by means of a hinge (130) to be pivotable about a pivot axis (132) which is slightly inclined to the vertical on the end of the second guiding rail (123) adjacent to the first guiding rail (103), so that under the weight force of a carrier for material to be conveyed (105) it experiences a torque relative to the pivot axis (123), which lets it gravitate into the diverting position.

## Revendications

1. Convoyeur suspendu qui comporte des rails de guidage (103, 123), un dispositif d'aiguillage (101) et des supports de produits à transporter (105), les supports de produits à transporter (105) présentant un corps de base respectif (111) et des galets de roulement (113a, 113b) s'éloignant de celui-ci vers l'extérieur vers des côtés opposés et pouvant être déplacés par guidage en suspension latérale le long d'une voie de transport respective avec respectivement au moins un galet de roulement (113a, 113b) sur un côté du corps de base (111) sur un rail de guidage concerné (103, 123), le galet de roulement (113a, 113b) étant en engagement avec un profilé de guidage (115a, 115b) du rail de guidage (103, 123), et le dispositif d'aiguillage comportant un premier rail de guidage (103) associé à une première voie de transport et un second rail de guidage (123) associé à une seconde voie de transport, qui mène vers le premier rail de guidage (103) et est fixé à l'aide d'une attache (127) par rapport au premier rail de guidage (103),
**caractérisé en ce**
**que** le dispositif d'aiguillage présente une branche d'aiguillage d'introduction (121) réalisée comme un segment de rail de guidage mobile pour le passage de supports de produits à transporter (105) amenés le long de la seconde voie de transport du second rail de guidage (123) au premier rail de guidage (103), la branche d'aiguillage d'introduction (121) étant maintenue de manière à pouvoir se déplacer librement en pivotement à l'aide d'un ensemble d'articulations (130) sur l'extrémité du second rail de guidage (123) contiguë au premier rail de guidage (103) dans le prolongement du second rail de guidage (123) de sorte qu'elle puisse pivoter entre une position d'introduction et une position passive et puisse être poussée par sollicitation par un support de produits à transporter (105) qui lui est amené par le second rail de guidage (123) de la position passive à la position d'introduction, la branche d'aiguillage d'introduction (121) formant dans la position d'introduction un prolongement du second rail de guidage (123) menant au premier rail de guidage (103) et étant positionnée par rapport au premier rail de guidage (103) de sorte qu'elle puisse guider un support de produits à transporter (105) respectif amené par le second rail de guidage lors de la suite de son mouvement sur le premier rail de guidage (103) et le support de produits à transporter (105) déplacé en suspension avec un galet de roulement (113b) disposé sur un côté de son corps de base (111) sur la branche d'aiguillage d'introduction (121) puisse venir en engagement avec un galet de roulement (113a) disposé sur l'autre côté de son corps de base (111) avec le profilé de guidage (115a) du premier rail de guidage (103).

2. Convoyeur suspendu selon la revendication 1, le second rail de guidage (123) et/ou la branche d'aiguillage d'introduction (121) présentant une inclinaison vers le premier rail de guidage (103) de sorte que des supports de produits à transporter (105) guidés dessus puissent se déplacer dans la zone de l'inclinaison seulement grâce à leur force de gravité vers le premier rail de guidage (103).

3. Convoyeur suspendu selon la revendication 1 ou 2, un élément directeur (134) étant disposé sur la transition entre et à distance du second rail de guidage (123) et de la branche d'aiguillage d'introduction (121), et ce pour le guidage forcé de supports de produits à transporter (105) amenés le long du second rail de guidage (123) et déplacés en suspension avec l'un de ses galets de roulement (113b) sur la branche d'aiguillage d'introduction (121) en direction du premier rail de guidage (103) de sorte que lorsque la branche d'aiguillage d'introduction (121) ne se trouve pas en position d'introduction, un moment poussant la branche d'aiguillage d'introduction (121) en position d'introduction peut être exercé par un support de produits à transporter (105) guidé à force sur l'élément directeur (134) sur la branche d'aiguillage d'introduction (121).

4. Convoyeur suspendu selon la revendication 3, l'élément directeur (134) étant une baguette de guidage rigide s'étendant au-dessus de la branche d'aiguillage d'introduction (121), qui peut venir en engagement de guidage avec le corps de base (111) d'un support de produits à transporter (105) amené à la branche d'aiguillage d'introduction (121) depuis le second rail de guidage (123).

5. Convoyeur suspendu selon l'une quelconque des revendications 1 à 4, la branche d'aiguillage d'introduction (121) étant logée de manière à pouvoir pivoter à l'aide d'une charnière (130) autour d'un axe de pivotement (132) légèrement incliné par rapport à la verticale sur l'extrémité contiguë au premier rail de guidage (103) du second rail de guidage (123) de sorte qu'elle subisse sous le poids d'un support de produits à transporter (105) un moment d'un couple par rapport à l'axe de pivotement (123), qui la laisse tendre vers la position d'introduction.
